**Europäisches Patentamt**

**European Patent Office**

**Office européen des brevets**

(19)

(11) Numéro de publication : **0 012 705 B1**

# (12) FASCICULE DE BREVET EUROPÉEN

(45) Date de publication du fascicule du brevet :
**11.05.83**

(21) Numéro de dépôt : **79430024.4**

(22) Date de dépôt : **05.12.79**

(51) Int. Cl.³ : **E 01 F 9/01, B 60 P 3/00, B 62 D 63/08, B 60 Q 7/00**

(54) **Remorque pour le transport de panneaux de signalisation ou publicitaires.**

(30) Priorité : **08.12.78 FR 7835003**

(43) Date de publication de la demande :
**25.06.80 Bulletin 80/13**

(45) Mention de la délivrance du brevet :
**11.05.83 Bulletin 83/19**

(84) Etats contractants désignés :
**AT BE CH DE GB IT NL SE**

(56) Documents cités :
**FR A 2 037 010**
**FR A 2 094 267**
**FR A 2 264 683**
**US A 3 095 230**
**US A 3 212 645**

(73) Titulaire : **Cerri, Jacques**
**Villa Primerose Rue Ste-Elise**
**St-Jean-du-Var F-83100 Toulon (FR)**

(72) Inventeur : **Cerri, Jacques**
**Villa Primerose Rue Sainte-Elise**
**Saint-Jean-du-Var F-83100 Toulon (FR)**
Inventeur : **Rebecq, Jean**
**213, Ancien Chemin de la Valette**
**F-83100 Toulon (FR)**

(74) Mandataire : **Moretti, René et al**
**C/O Cabinet BEAU DE LOMENIE 14, rue Raphael**
**F-13008 Marseille (FR)**

EP 0 012 705 B1

Jouve, 18, rue St-Denis, 75001 Paris, France

Remorque pour le transport de panneaux de signalisation ou publicitaires

La présente invention a pour objet une remorque pour le transport de panneaux de signalisation ou publicitaires.

Le secteur technique de l'invention est celui du matériel de transport tracté.

On connaît déjà des remorques pour le transport des panneaux de signalisation temporaire fixés à une armature repliable, dans lesquelles les panneaux sont rangés horizontalement sur des glissières latérales et sur lesquelles coulissent les pieds desdits panneaux.

On connaît également des remorques destinées au transport de panneaux de signalisation temporaire pour route et autoroute dont les panneaux sont disposés verticalement dans le sens longitudinal de la remorque. Une telle remorque est décrite dans le brevet français 2 264 683 et comporte des moyens pour permettre le chargement et le déchargement par l'arrière desdits panneaux. Ceux-ci comportent des galets de roulement spécialement adaptés par lesquels ils sont suspendus à des glissières longitudinales espacés les uns des autres. Des moyens sont prévus pour immobiliser les panneaux une fois chargés sur la remorque.

La présente invention concerne une remorque pour le transport de panneaux de signalisation ou de publicité d'une conception nouvelle en regard de l'état de la technique.

L'objectif à atteindre est une remorque spécialement aménagée pour transporter des panneaux de signalisation temporaire ou des panneaux publicitaires et pour faciliter le chargement et le déchargement desdits panneaux, une telle remorque étant adaptée pour le transport éventuel de cônes de balisage et/ou de panneaux supplémentaires.

Cet objectif est atteint par la remorque selon l'invention pour le transport de panneaux de signalisation ou publicitaires comportant un châssis monté sur des roues, lequel châssis porte au moins une poutre s'étendant parallèlement au châssis et fixée à la partie supérieure d'une structure comportant des montants et s'étendant vers le haut à partir du platelage du châssis, laquelle poutre comportant des moyens pour y suspendre un à un lesdits panneaux de manière à les juxtaposer les uns devant les autres en vue de leur transport (voir FR-A-2 264 683), caractérisée en ce que la structure se compose de plusieurs éléments présentant chacun au moins deux montants, chaque élément étant situé dans l'un ou l'autre de deux plans symétriques par rapport à un plan vertical longitudinal à la remorque et inclinés l'un vers l'autre en direction de ladite poutre, les panneaux pouvant venir en appui sur lesdits montants.

Selon un mode de réalisation, les poutres sur lesquelles sont suspendus les panneaux de signalisation sont disposées en croix et comportent des crémaillères dans les crans desquelles les organes de suspension des panneaux sont engagés.

Le résultat de l'invention est une remorque pour le transport de panneaux de signalisation temporaire ou des panneaux de publicité, permettant de réaliser avec facilité le chargement et le déchargement desdits panneaux.

Les avantages d'une telle remorque sont les suivants :

Elle permet le rangement simultané de plusieurs types de panneaux : triangulaires, circulaires ou autres..., lesquels sont accrochés et suspendus aux potences. Celles-ci étant équipées d'échancrures formant des crémaillères, les panneaux sont calés dans le fond desdites échancrures et sont parfaitement maintenus pendant le transport. Du fait de la conception de la remorque, les panneaux se présentent dans une position sensiblement verticale et sont facilement accessibles par les côtés latéraux et par l'arrière de la remorque.

Elle est également particulièrement adaptée pour le transport des panneaux de signalisation temporaire routiers fixés à des supports articulés.

En plus desdits panneaux de signalisation, elle permet le transport de cônes de balisage et également de panneaux supplémentaires, lesquels panneaux ne sont pas accrochés aux potences mais sont rangés dans la partie centrale de la remorque.

Une telle remorque est d'un poids réduit et donc d'un coût inférieur à celui des matériels existants, actuellement utilisés.

Compte tenu du fait que son poids en charge n'excède pas 750 kilogrammes, il n'est pas nécessaire que son équipement comporte un dispositif de freinage.

La remorque selon l'invention est spécialement adaptée pour le transport d'un ensemble complet de panneaux et de balises pour la signalisation d'un chantier routier.

On précise toutefois que la destination d'une telle remorque n'est pas limitée au transport des panneaux routiers de signalisation temporaire, mais s'étend également au transport des panneaux publicitaires.

D'autres avantages de l'invention ressortiront encore à la lecture de la description suivante uniquement donnée à titre d'exemple non limitatif en référence au dessin annexé sur lequel :

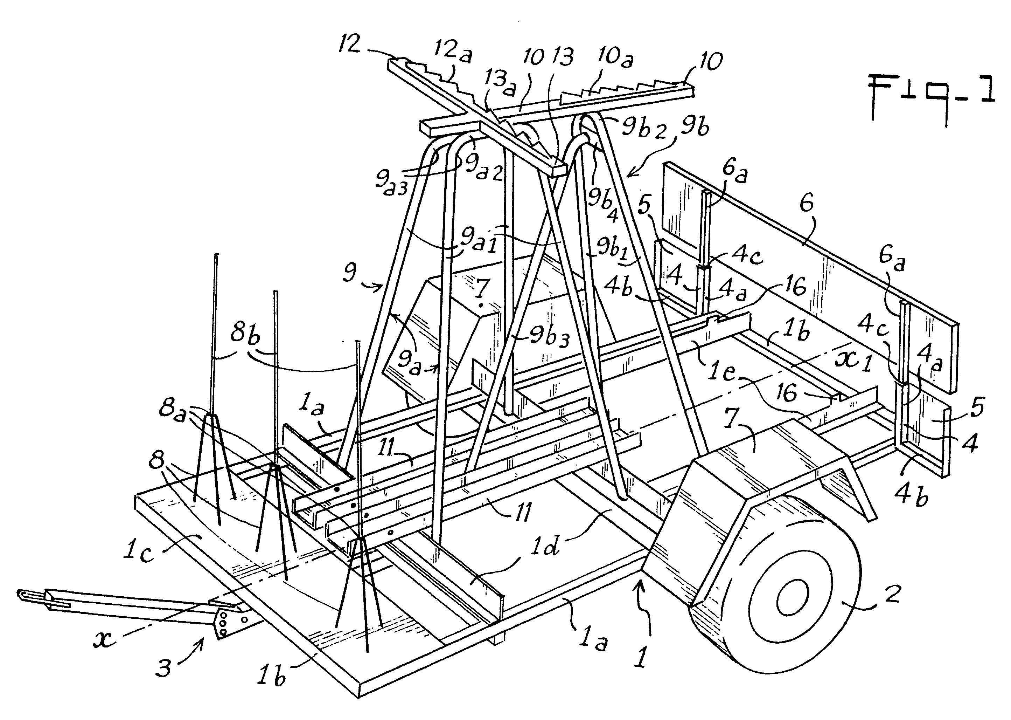

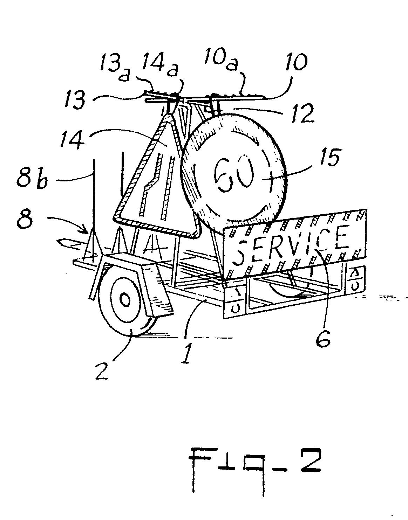

La figure 1 est une vue en perspective d'une remorque pour le transport de panneaux de signalisation temporaire et de cônes de balisage ; la figure 2 est une vue en perspective schématique d'une remorque selon l'invention représentée chargée de panneaux et de balises de signalisation routière.

Telle qu'illustrée plus particulièrement à la figure 1 du dessin, une remorque selon l'invention comporte, selon un mode de réalisation, un châssis 1, porté par deux roues 2. Le châssis 1 est d'une forme rectangulaire et se compose de deux longerons longitudinaux parallèles à l'axe longitudinal médian $XX_1$ de la remorque et de deux traverses d'extrémités 1b s'étendant perpendicu-

lairement auxdits longerons 1a. Ces traverses et ces longerons délimitent la périphérie du châssis 1.

Celui-ci comporte à l'avant et dans le prolongement de l'axe longitudinal $XX_1$, un attelage 3, et à l'arrière et de chaque côté du châssis, un support en L 4, lesquels supports sont réalisés à partir de tubes carrés et portent des plaques 5 sur lesquelles sont fixés les appareils réglementaires de signalisation : triangles, feux de position et d'indication de freinage.

Ces supports et les plaques qui leur sont associés sont situés dans un même plan perpendiculaire au plan du châssis. Chaque support 4 se compose d'un élément vertical 4a s'étendant vers le haut à partir du châssis et d'un élément horizontal 4b s'étendant à l'extérieur du châssis à partir des longerons 1a. Les éléments tubulaires 4a délimitent ainsi des logements 4c dans lesquels s'engagent les montants 6a d'un panneau réglementaire de « service » amovible 6.

Ce panneau est d'une forme allongée et s'étend sur la largeur du châssis 1. Le panneau 6 est ainsi dans un plan parallèle aux supports 4 et aux plaques 5.

Les roues 2 sont partiellement enveloppées à leur partie supérieure par une garde-boue 7.

Le châssis 1 comporte également, du côté de l'attelage 3, une plaque 1c, laquelle s'étend sur la largeur du châssis et masque une partie du vide délimité par la traverse de tête 1b et les longerons 1a, et encore des traverses intermédiaires 1d et des longerons intermédiaires 1e.

Cet ensemble plaque 1c, traverses 1d et longerons le constituent le platelage dont il est question dans les revendications.

La plaque 1c est une tôle d'acier fixée par exemple par soudure sur la face supérieure du cadre du châssis 1a/1b. Cette plaque porte des supports 8 par exemple au nombre de trois et régulièrement espacés sur la largeur du châssis pour recevoir des cônes de balisage routiers.

Chacun de ces supports 8 adopte la forme d'un trépied pyramidal et est ainsi réalisé à partir de tiges d'acier reliées les unes aux autres à l'une de leurs extrémités pour former le sommet 8a de la pyramide. Ces tiges sont fixées par soudure à la tôle 1c par leur autre extrémité. Le sommet 8a du support 8 est prolongé par une tige rectiligne 8c qui s'étend sur l'axe longitudinal du trépied et sur une certaine longueur, par exemple cinquante centimètres.

On comprend l'utilisation de tels trépieds, leur conformation est telle qu'ils permettent d'y emboîter un cône de balisage, d'autres cônes pouvant ainsi être emboîtés les uns dans les autres. Le sommet desdits cônes est percé et est donc traversé par la tige 8b qui permet ainsi de les guider au moment de leur mise en place et de les maintenir en position pendant le transport.

Les traverses 1d, qui sont au nombre de deux, sont espacées l'une de l'autre dans la partie centrale du châssis et sont parallèles entre elles et aux traverses 1b précédemment citées. Elles sont réalisées à partir de fers profilés du commerce, par exemple des cornières à ailes inégales.

La remorque selon l'invention comporte une structure métallique 9 fixée au châssis par l'intermédiaire des traverses 1d et des longerons intermédiaires 1e.

Cette structure 9 se compose par exemple, d'une part de deux éléments 9a réalisés à partir de fers profilés, par exemple des tubes d'une section droite circulaire, coudés deux fois pour adopter la forme générale de deux trapèzes isocèles, et d'autre part d'un autre élément supplémentaire 9b réalisé, comme les deux autres, à partir d'un tube de section circulaire cintré en son milieu pour adopter la forme d'un triangle isocèle.

Chacun desdits éléments 9a comporte ainsi deux montants $9a_1$, oblique par rapport à l'axe de symétrie du trapèze, une partie droite $9a_2$ située à leur sommet, laquelle est reliée auxdits montants $9a_1$ par des parties courbes $9a_3$.

L'élément supplémentaire 9b comporte deux montants $9b_1$ reliés à leur partie supérieure par une partie courbe $9b_2$.

Les éléments 9a sont situés dans des plans inclinés l'un vers l'autre symétriquement par rapport au plan médian passant par l'axe $XX_1$ de la remorque et perpendiculaire au plan du châssis, leurs sommets $9a_2$ sont appliqués l'un contre l'autre et sont fixés par exemple par soudure à une poutre 10 s'étendant suivant l'axe longitudinal de la remorque et située dans un plan parallèle au plan du châssis 1.

Les deux montants $9a_1$ de chacun des éléments 9a de la structure convergent de bas en haut et sont fixés par leurs pieds aux traverses 1d qui composent le platelage du châssis.

La poutre 10 s'étend le long du sommet de la partie 9a de la structure et se prolonge en porte à faux vers l'arrière de la remorque à la manière d'une potence.

L'élément supplémentaire 9b est situé dans un plan incliné du côté du sommet de ladite partie 9a, lequel plan est transversal au plan médian vertical passant par l'axe $XX_1$. L'élément 9b est fixé d'une part par son sommet $9b_2$ à la poutre 10 et d'autre part par les pieds de ses montants $9b_1$, aux longerons intermédiaires 1e du platelage.

L'élément 9b comporte en outre une jambe de force $9b_3$, laquelle s'étend du platelage du châssis vers la poutre 10, est reliée audit élément triangulaire 9b, au voisinage de son sommet et est fixée à une courte traverse $9b_4$, soudée aux montants $9b_1$ et à la base du cintre $9b_2$ de l'élément 9b.

Cette jambe de force s'étend à l'intérieur de la partie 9a de la structure et est fixée, par son extrémité inférieure, à deux supports d'une section droite en U 11, lesquels sont en appui sur les traverses 1d et sont fixés à celles-ci, par exemple par soudure.

Ces deux supports 11 sont parallèles entre eux et ont leurs ailes dirigées vers le haut. Ils ont pour fonction de permettre d'y disposer des panneaux de signalisation supplémentaires, lesquels sont en appui par leur partie supérieure sur la jambe de force $9b_3$ et sont éventuellement retenus par les montants $9a_1$ de la structure 9 en cas de chaos pendant leur transport.

La structure 9 porte également à son sommet, en plus de la poutre 10, deux autres poutres 12/13, disposées dans le prolongement l'une de l'autre et perpendiculairement à la poutre 10. L'ensemble des poutres 10/12/13 forme ainsi une croix située dans un plan parallèle au châssis. Les poutres 12/13 s'étendent à l'extérieur des éléments trapézoïdaux 9a, à la manière de potences. Elles sont réalisées à partir de profilés du commerce, par exemple des tubes ou encore des barres de section rectangulaires et comportent le long de leur bord supérieur une crémaillère 10a/12a/13a, chaque crémaillère est, selon un mode de réalisation, obtenue à partir d'une forte tôle comportant des échancrures en dents de scie dont l'inclinaison est orientée du côté du centre de l'ensemble des potences.

Comme on peut le voir sur le dessin à la figure 1, les dents des crémaillères 12a/13a sont réparties le long des potences 12/13, les dents de la crémaillère 10a sont réparties sur la partie de la poutre 10 située au-dessus de l'élément 9b de la structure et s'étendent en porte à faux vers l'arrière à partir de cette dernière.

On précise ici que les crémaillères 10a/12a/13a ne sont pas limitées à des tôles échancrées en forme de dents de scie, mais peuvent adopter toutes autres formes permettant de remplir la même fonction, c'est-à-dire la suspension des panneaux de signalisation et leur calage en vue de leur transport.

Deux ergots 16, soudés sur la partie arrière de l'aile verticale des traverses 1e empêchent les supports de glisser vers l'arrière lorsque le panneau arrière 6 est enlevé.

La figure 2 illustre une remorque suivant l'invention partiellement chargée et sur laquelle on peut voir de quelle façon sont suspendus les panneaux. Le dessin illustre deux panneaux 14/15 disposés sur la structure porteuse 9. Le panneau 14 est d'une forme triangulaire, le panneau 15 est circulaire. Evidemment la disposition représentée sur le dessin peut être inversée. Ces panneaux sont fixés à des supports articulés et comportent chacun un anneau ou un crochet 14a/15a qui permettent de les suspendre aux crémaillères 10a/12a/13a.

On voit à la lecture de la figure 2 du dessin que les panneaux sont aisément accessibles par les côtés et par l'arrière de la remorque.

La sécurité du personnel de chantier est d'ailleurs accrue du fait que la remorque permet d'atteindre les panneaux en y accédant par le côté latéral opposé à la voie empruntée par les véhicules.

Bien entendu, sans sortir du cadre de l'invention, les diverses parties de la remorque qui viennent d'être décrites à titre d'exemple pourront être remplacées par des parties équivalentes remplissant la même fonction dans le cadre défini par les revendications.

**Revendications**

1. Remorque pour le transport de panneaux de signalisation ou publicitaires, comportant un châssis (1) monté sur des roues (2), lequel châssis porte au moins une poutre (10) s'étendant parallèlement au châssis (1) et fixée à la partie supérieure d'une structure (9) comportant des montants ($9a_1$) et s'étendant vers le haut à partir du platelage (1c/1d/1e) du châssis (1), ladite poutre (10) comportant des moyens (10a) pour y suspendre un à un lesdits panneaux de manière à les juxtaposer les uns devant les autres en vue de leur transport, caractérisée en ce que la structure (9) se compose de plusieurs éléments (9a) présentant chacun au moins deux montants ($9a_1$), chaque élément étant situé dans l'un ou l'autre de deux plans symétriques par rapport à un plan vertical longitudinal à la remorque et inclinés l'un vers l'autre en direction de ladite poutre (10), les panneaux pouvant venir en appui sur lesdits montants ($9a_1$).

2. Remorque selon la revendication 1, caractérisée en ce que la poutre (10) s'étend en porte à faux à partir de la structure (9) à la manière d'une potence.

3. Remorque selon l'une quelconque des revendications 1 et 2, caractérisée en ce qu'elle comporte une première poutre (10) s'étendant dans l'axe longitudinal de la remorque et au moins une seconde poutre (12) disposée transversalement à ladite première poutre (10), de telle sorte que l'ensemble des deux poutres constitue un ensemble de trois potences disposées en croix.

4. Remorque selon l'une quelconque des revendications 1 à 3, caractérisée en ce que la structure (9) se compose de deux éléments identiques (9a) réalisés à partir de profilés cintrés pour adopter la forme générale de trapèzes isocèles, lesquels éléments (9a) sont dans des plans inclinés l'un vers l'autre, symétriquement par rapport audit plan vertical longitudinal à la remorque, lesquels éléments (9a) sont reliés par leur sommet à ladite première poutre longitudinale (10).

5. Remorque selon la revendication 4, caractérisée en ce que la structure (9) comporte au moins un élément supplémentaire (9b) réalisé à partir d'un profilé cintré pour adopter la forme générale d'un triangle isocèle, lequel élément est situé dans un plan incliné du côté du sommet desdits éléments trapézoïdaux (9a) et transversal audit plan vertical et est fixé à ladite poutre longitudinale (10).

6. Remorque selon la revendication 5, caractérisée en ce que l'élément triangulaire (9b) comporte une jambe de force ($9b_3$), laquelle est fixée au platelage du châssis (1) et est reliée à l'élément triangulaire (9b) au voisinage de son sommet, laquelle jambe de force ($9b_3$) est située dans ledit plan vertical longitudinal à la remorque.

7. Remorque selon la revendication 6, caractérisée en ce que la jambe de force ($9b_3$) s'étend à l'intérieur de la partie de la structure (9) composée par lesdits éléments trapézoïdaux (9a), sur laquelle jambe de force (9b₃) les panneaux peuvent venir en appui, par leur partie supérieure, de part et d'autre de la jambe de force (9b₃).

8. Remorque selon l'une quelconque des revendications 1 à 7, caractérisée en ce qu'elle comporte des armatures (8) en forme de pyramide pour y emboîter des cônes de balisage, lesquelles armatures sont prolongées à partir de leur sommet et sur leur axe longitudinal par une tige (8b) de guidage et de maintien desdits cônes.

9. Remorque selon l'une quelconque des revendications 1 à 3, caractérisée en ce que les poutres (10/12) sur lesquelles sont suspendus les panneaux munis d'organes de suspension comportent des crémaillères (10a/12a/13a) dans les crans desquelles les organes de suspension des panneaux sont engagés.

**Claims**

1. Trailer for transporting traffic signs or advertizing panels, comprising a chassis (1) mounted on wheels (2), which chassis carries at least one girder (10) extending in parallel to the chassis (1) and fixed on the upper part of a structure (9) which comprises legs (9a₁) and extends upwards from the bottom frame (1c/1d/1e) of the chassis (1), the said girder (10) comprising means (10a) for suspending thereon the said panels or signs one by one so as to juxtapose them one in front of the other for transport purposes, characterised in that the structure (9) is composed of a plurality of elements (9a) each one presenting at least two legs (9a₁), each element being situated in either one of two planes symmetrical with respect to a vertical plane longitudinal to the trailer, and inclined one towards the other in the direction of said girder (10), the panels or signs being adapted to come into resting contact against the said legs (9a₁).

2. Trailer according to claim 1, characterised in that the girder (10) overhangs from the structure (9) in gantry fashion.

3. Trailer according to any one of claims 1 and 2, characterised in that it comprises a first girder (10) which extends in alignment with the longitudinal axis of the trailer and at least a second girder (12) situated transversely with respect to the first girder (10), so that the assembly of the two girders constitute a set of three gantries directed cross-wise.

4. Trailer according to any one of claims 1 to 3, characterised in that the structure (9) is composed of two identical elements (9a) produced from section irons bent so as to adopt the general shape of isosceles trapeziums, which elements (9a) are contained in planes inclined one towards the other, symmetrically with respect to the said vertical plane longitudinal to the trailer, said elements (9a) being joined by their top end to the said first longitudinal girder (10).

5. Trailer according to claim 4, characterised in that the structure (9) comprises at least one additional element (9b) produced from a section iron bent to adopt the general shape of an isosceles triangle, which element is situated inside a plane which is inclined on the summit side of the said trapezoidal elements (9a) and transversed to the said vertical plane and is fixed to the said longitudinal girder (10).

6. Trailer according to claim 5, characterised in that the triangular element (9b) comprises a strut (9b₃), which strut is secured to the bottom frame of the chassis (1) and connected to the triangular element (9b) close to its summit which strut (9b₃) is situated inside the said vertical plane longitudinal to the trailer.

7. Trailer according to claim 6, characterised in that the strut (9b₃) extends inside the part of the structure (9) which is composed by the said trapezoidal elements (9a), on which strut (9b₃) the panels or signs can come to rest, by their upper part, on either sides of said strut (9b₃).

8. Trailer according to any one of claims 1 to 7, characterised in that it comprises pyramid-shaped armatures (8) for fitting on signalling cones, which armatures are extended from their summit and along their longitudinal axis by a head (8b) for guiding and holding the said cones.

9. Trailer according to any one of claims 1 to 3, characterised in that the girders (10/12) on which are suspended the panels or signs provided with suspension members comprise racks (10a/12a/13a) in the notches of which are engaged the panel or sign suspension members.

**Ansprüche**

1. Anhänger für den Transport von Signal- oder Reklametafeln, mit einem auf Rädern (2) montierten Fahrgestell (1) das wenigstens einen Träger (10) trägt, der sich parallel zum Fahrgestell (1) erstreckt und am Oberteil eines Aufbaus (9) befestigt ist, der Stützen (9a₁) aufweist und sich vom Boden (1c/1d/1e) des Fahrgestells (1) aus nach oben erstreckt, wobei der Träger (10) Mittel (10a) aufweist für das dort einzeln erfolgende Aufhängen der Tafeln in der Weise, daß sie für ihren Transport aufeinanderliegen, dadurch gekennzeichnet, daß der Aufbau (9) auf mehreren Elementen (9a) mit jeweils wenigstens zwei Stützen (9a₁) besteht, wobei jedes Element sich in der einen oder anderen von zwei Ebenen befindet, die gegenüber einer senkrechten und zum Anhänger in Längsrichtung verlaufenden Ebene symmetrisch und in Richtung des Trägers (10) zueinander geneigt sind, wobei die Tafeln an den Stützen (9a₁) anliegen können.

2. Anhänger nach Anspruch 1, dadurch gekennzeichnet, daß der Träger (10) sich vom Aufbau (9) aus nach Art eines Auslegers freitragend erstreckt.

3. Anhänger nach einem der Ansprüche 1 und 2, gekennzeichnet durch einen ersten Träger (10), der sich in der Längsachse des Anhängers erstreckt, und durch wenigstens einen zweiten Träger (12), der zum ersten Träger (10) derart quer angeordnet ist, daß die beiden Träger zusammen eine Anordnung aus drei kreuzförmig angeordneten Auslegern bilden.

4. Anhänger nach einem der Ansprüche 1 bis 3, dadurch gekennzeichnet, daß der Aufbau (9) aus zwei identischen Elementen (9a) besteht, die aus Profilen hergestellt sind, die zur Annahme der Gesamtform von gleichschenkeligen Trapezen gebogen sind, wobei die Elemente (9a) sich Ebenen befinden, die zueinander geneigt und zur senkrechten sowie in Längsrichtung des Anhängers verlaufenden Ebene symmetrisch sind, und wobei die Elemente (9a) an ihren Scheiteln mit dem ersten Längsträger (10) verbunden sind.

5. Anhänger nach Anspruch 4, dadurch gekennzeichnet, daß der Aufbau (9) wenigstens ein zusätzliches Element (9b) aufweist, das aus einem Profil hergestellt ist, das zur Annahme der Gesamtform eines gleichschenkeligen Dreiecks gebogen ist, wobei das Element sich in einer Ebene befindet, die zur Seite des Scheitels der trapezförmigen Elemente geneigt ist und zur senkrechten Ebene quer verläuft, und wobei das Element am Längsträger (10) befestigt ist.

6. Anhänger nach Anspruch 5, dadurch gekennzeichnet, daß das dreieckige Element (9b) eine Strebe ($9b_3$) aufweist, die am Boden des Fahrgestells (1) befestigt und mit dem dreieckigen Element (9b) in Nähe des Scheitels verbunden ist, wobei sich die Strebe ($9b_3$) in der senkrechten und zum Anhänger in Längsrichtung verlaufenden Ebene befindet.

7. Anhänger nach Anspruch 6, dadurch gekennzeichnet, daß sich die Strebe ($9b_3$) innerhalb des durch die trapezförmiten Elemente (9a) gebildeten Aufbaus erstreckt, wobei die Tafeln mit ihrem Oberteil beiderseits der Strebe ($9b_3$) in Anlage kommen können.

8. Anhänger nach einem der Ansprüche 1 bis 7, gekennzeichnet durch pyramidenförmige Halter (8) zur dortigen Ineinanderschachtelung von Straßenmarkierungskegeln, wobei die Halter (8) ausgehend von ihrem Scheitel und in ihrer Längsachse durch eine Stange (8b) zum Führen und Halten der Kegel verlängert sind.

9. Anhänger nach einem der Ansprüche 1 bis 3, dadurch gekennzeichnet, daß die Träger (10/12), an denen die mit Aufhängeorganen versehenen Tafeln aufgehängt sind, Zahnstangen (10a/12a/13a) aufweisen, in deren Einkerbungen die Aufhängeorgane für die Tafeln eingreifen.

Fig-1

0012705

Fig-2